# DEMANDE DE BREVET EUROPEEN

(11) **EP 1 251 623 A1**
(43) Date de publication de la demande: **23.10.2002**
(21) Numéro de dépôt: 02290956.8
(22) Date de dépôt: 16.04.2002
(51) Int. Cl.: H02K 3/18, H02K 3/52

(54) **Stator de machine tournante électrique comportant des bobines individuelles démontables**

(30) Priorité: 17.04.2001 FR 0105187
(71) Demandeur: MOTEURS LEROY-SOMER, 16000 Angouleme (FR)
(72) Inventeur: Eydelie, André, 16710 Saint-Yrieix (FR); Augier, Philippe, 16430 Champniers (FR); Guillot, Jean-Marie, 16320 Blanzaguet, Saint Cybard (FR)
(74) Mandataire: Tanty, François

(57) **Abrégé**

La présente invention concerne un stator de machine tournante électrique, comportant un circuit magnétique de stator, comprenant des dents (130) et des bobines individuelles (340) engagées chacune sur une dent, chaque bobine comportant des extrémités de connexion électrique formées par un faisceau plat de fils dénudés recourbés en forme de crochet, ces extrémités de connexion étant soudées sur des portions localement dénudées (151) de câbles électriques gainés (150).

## Description

La présente invention concerne les machines tournantes électriques et plus particulièrement, mais non exclusivement, les moteurs synchrones.

On connaît par la demande EP-A- 0 872 943 une machine électrique tournante dont le rotor comprend des aimants déposés en surface sur le rotor et le circuit magnétique du stator reçoit des bobines individuelles. Le stator exerce sur le rotor des forces radiales diamétralement opposées, tournantes. Il en résulte une sollicitation mécanique du stator tendant à l'ovaliser, ce qui génère des vibrations et du bruit. Enfin, la largeur des dents est constante, ce qui présente deux inconvénients au moins. D'une part, le matériau magnétique du stator est susceptible d'être saturé à la base des dents. D'autre part, le remplacement d'une bobine impose de procéder à une nouvelle imprégnation du stator, afin d'immobiliser correctement la bobine sur le stator, et la machine ne peut être réparée sur place et doit retourner chez le fabricant.

L'invention a notamment pour objet de faciliter la fabrication des stators bobinés sur dents, c'est-à-dire dans lesquels chaque dent constitue le noyau d'un enroulement. Dans un stator bobiné sur dents, le nombre de dents n_{dents} est de préférence fonction du nombre de paires de pôles nₚₐᵢᵣₑₛ et du nombre de phases nₚₕₐₛₑₛ suivant la formule n_{dents} = nₚₐᵢᵣₑₛ * nₚₕₐₛₑₛ.

Elle y parvient grâce à un nouveau stator de machine tournante électrique, caractérisé par le fait qu'il comporte un circuit magnétique de stator, comprenant des dents et des bobines individuelles engagées chacune sur une dent, chaque bobine comportant des extrémités de connexion électrique formées par un faisceau plat de fils dénudés recourbés en forme de crochet, ces extrémités de connexion étant soudées sur des portions localement dénudées de câbles électriques gainés.

L'utilisation de bobines individuelles telles que définies ci-dessus, en combinaison avec des câbles électriques gainés, facilite la construction et l'entretien de la machine. En particulier, une bobine peut être aisément remplacée, sans avoir à retourner la machine chez le fabricant, ce qui permet de diminuer le temps d'immobilisation de l'installation associée à la machine.

Les crochets précités peuvent être dirigés vers un plan médian de la bobine, perpendiculaire à l'axe d'enroulement de la bobine, ce qui permet de gagner en compacité.

Dans une réalisation particulière, chaque dent présente deux faces opposées, sensiblement planes et non parallèles, qui convergent avec un angle vers le rotor et les bobines présentent une section intérieure ayant deux faces opposées faisant un angle sensiblement égal à celui des dents, de manière à pouvoir se coincer sur celles-ci.

Cet effet de serrage est particulièrement utile pour contribuer à immobiliser une bobine de remplacement préimprégnée, montée sur le stator, sans qu'il soit nécessaire de procéder à une nouvelle imprégnation de ce dernier par une résine isolante. Un tel effet de serrage n'est pas possible avec la machine décrite dans la demande de brevet EP-A- 0 872 943, dans laquelle les dents présentent une largeur constante. De plus, un autre avantage à avoir des dents dont la largeur croît à partir d'une certaine distance de leur extrémité libre en s'éloignant du rotor réside dans la diminution du risque de saturation des tôles magnétiques utilisées, en raison de la section plus grande offerte aux lignes de champ magnétique. Il est ainsi possible d'utiliser un matériau magnétique moins coûteux.

Dans une réalisation particulière, chaque bobine individuelle comporte un faisceau de fils isolés, ce faisceau étant sensiblement plat et enroulé autour d'un axe géométrique d'enroulement de manière à former une pluralité de spires superposées, la section transversale du faisceau, au niveau des spires superposées, ayant une grande dimension orientée sensiblement perpendiculairement à l'axe d'enroulement de la bobine. Les fils sont de préférence de section circulaire, ayant un diamètre compris par exemple entre 0,3 mm et 2,5 mm. Cette configuration permet de réduire les pertes par hautes fréquences à l'intérieur du cuivre, aux vitesses de rotation élevées du rotor.

Dans une telle bobine, les spires peuvent être jointives, ce qui permet un bon remplissage des encoches.

La section intérieure de la bobine est de préférence sensiblement rectangulaire. Elle peut avantageusement être plus large d'un côté que de l'autre, de façon à permettre son montage sur une dent présentant un profil complémentaire avec un certain effet de serrage, comme mentionné plus haut.

Dans une réalisation particulière, les dents du stator comportent des découpes permettant de fixer sur le stator des cales de maintien des bobines individuelles montées sur les dents, chaque cale comportant une cloison séparatrice s'étendant sensiblement au milieu de l'encoche correspondante.

Chaque bobine présente avantageusement une section intérieure dont la dimension du grand côté est supérieure à la dimension axiale de la dent sur laquelle elle est engagée, afin de ménager un espace suffisant pour permettre le passage d'un détecteur permettant de délivrer un signal représentatif de la rotation du rotor. La machine comporte avantageusement au moins un détecteur de champ magnétique, monté sur le stator de manière à détecter le champ magnétique des aimants du rotor depuis un emplacement venant en recouvrement, lorsque la machine est observée selon l'axe de rotation du rotor, d'une région périphérique du rotor. Cette région périphérique est avantageusement celle s'étendant autour d'une joue d'extrémité située en retrait du bord radialement extérieur des aimants.

Le courant étant à *n* phases, la machine comporte de préférence *n* détecteurs montés sur *n* dents consécutives à proximité d'une ouïe d'un carter de la machine. Ce ou ces détecteurs peuvent être fixés sur une face du circuit magnétique du stator et s'étendre chacun selon l'axe radial de la dent correspondante. Chaque détecteur traverse avantageusement la bobine engagée sur la dent correspondante, comme mentionné plus haut. La machine gagne ainsi en compacité.

L'invention a encore pour objet un moteur synchrone comportant un rotor à aimants permanents, de préférence à concentration de flux, et un stator bobiné sur dents, tel que défini ci-dessus.

La combinaison d'un rotor à concentration de flux et d'un stator bobiné sur dents permet d'avoir une machine puissante sous un faible encombrement, ce qui autorise notamment le montage du moteur en porte-à-faux à l'extrémité d'un arbre, entraînant une diminution du nombre de roulements.

Une telle structure permet également de diminuer le prix de revient de la machine car le nombre de dents et de bobines est relativement faible.

De plus, le stator est compact, car les têtes des bobines sont courtes.

Les phases peuvent être bien séparées électriquement, sans contacts ni croisements.

L'invention a encore pour objet un procédé de fabrication d'un stator, caractérisé par le fait qu'il comporte les étapes suivantes :
- fabriquer un circuit magnétique de stator ayant des dents,
- fabriquer des bobines individuelles ayant chacune des extrémités de connexion électrique formées par un faisceau plat de fils dénudés recourbés en forme de crochet,
- souder les extrémités de connexion électrique des bobines à des câbles gainés, partiellement dénudés aux points de connexion avec les bobines.

D'autres caractéristiques et avantages de la présente invention ressortiront à la lecture de la description détaillée qui va suivre, d'exemples de réalisation non limitatifs de l'invention, et à l'examen du dessin annexé, ce dernier faisant partie intégrante de la description, sur lequel :
- la figure 1 est une vue schématique en perspective d'un moteur synchrone conforme à un exemple de mise en oeuvre de l'invention,
- la figure 2 est une vue schématique de dessus selon la flèche II de la figure 1,
- la figure 3 représente isolément, en perspective et d'une manière schématique, le stator,
- la figure 4 représente isolément, en perpective, un secteur du circuit magnétique du stator,
- la figure 5 illustre l'assemblage du secteur de la figure 4 avec un secteur identique,
- la figure 6 représente isolément, en perspective, une bobine individuelle,
- la figure 7 est une section selon VII-VII de la figure 6,
- la figure 8 représente de manière schématique un chapelet de bobines utilisé pour la fabrication du stator,
- la figure 9 illustre de manière schématique la mise en place des chapelets de bobines sur le stator, au cours de la fabrication du stator,
- la figure 10 est une vue analogue à la figure 9, très schématique et simplifiée, tous les chapelets ayant été mis en place, pour illustrer le trajet circulaire des câbles d'amenée du courant, et
- la figure 11 est un schéma donnant un exemple de connexion des bobines (numérotées de 1 à 12) entre elles.

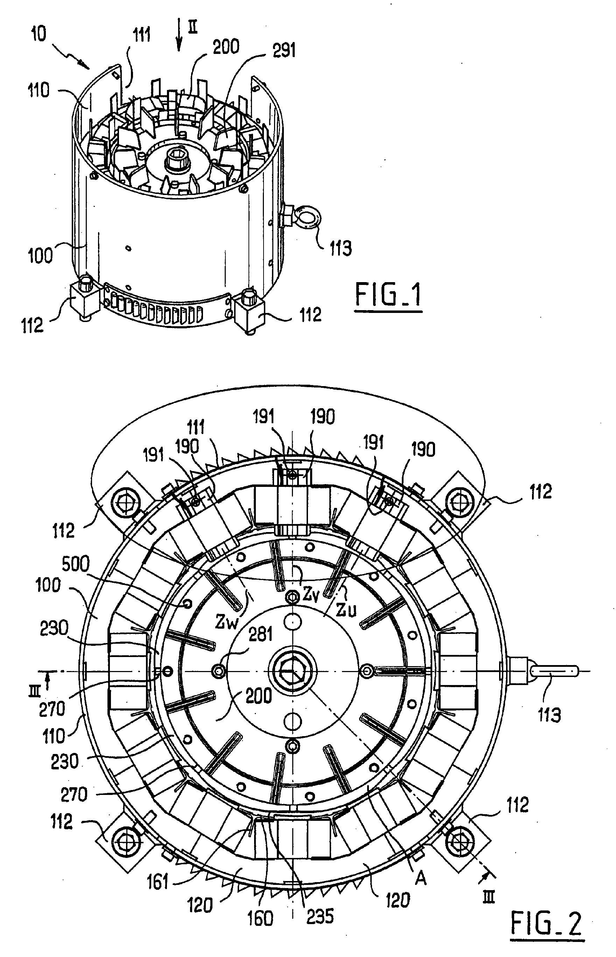

On a représenté aux figures 1 et 2 un moteur synchrone 10 conforme à l'invention, comportant un stator 100 et un rotor 200. Le moteur 10 est sans balais, à rotor à concentration de flux et à stator bobiné sur dents, et fonctionne en courant triphasé.

Le stator 100 comporte un carter 110 en acier, présentant une ouïe latérale 111 pour le passage notamment des conducteurs électriques d'alimentation des enroulements du stator. Le carter est muni, extérieurement, de pattes de fixation 112 et d'un crochet de levage 113.

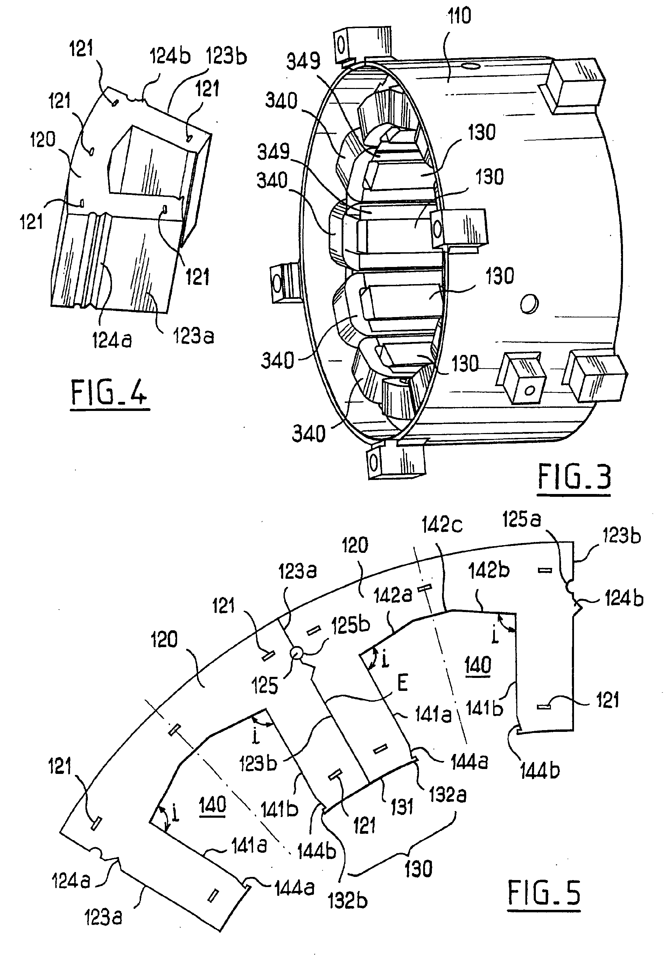

Le stator 100 comporte un circuit magnétique comprenant, dans l'exemple représenté, une pluralité de secteurs 120 identiques, dont l'un d'eux est représenté isolément en perpective à la figure 4.

Chaque secteur 120 est constitué par un paquet de tôles magnétiques identiques superposées et clipsées entre elles de manière à constituer un ensemble unitaire, le clipsage étant obtenu selon une technique connue en elle-même grâce à des déformations ponctuelles de chaque tôle en plusieurs points d'accrochage 121. L'utilisation d'un paquet de tôles magnétiques permet de limiter les pertes par courants induits. En variante, le circuit magnétique du stator pourrait être formé par la superposition de tôles chacune de forme générale annulaire, dans lesquelles seraient découpées toutes les dents 130 du stator. En variante encore, les secteurs pourraient comporter plusieurs dents chacun. Deux secteurs 120 forment, lorsque assemblés, une dent 130 servant au montage d'une bobine individuelle 340, comme on peut le voir sur la figure 3 notamment. Le nombre de dents est dans l'exemple décrit égal à 12, le moteur étant destiné à être alimenté en courant triphasé et le rotor comportant 8 pôles. Bien entendu, le nombre de pôles du rotor pourrait être différent et notamment être égal à 12 ou 16 par exemple. Le stator pourrait encore, bien que cela présente certains inconvénients comme expliqué plus haut, avoir un nombre de dents qui ne soit pas lié au nombre de paires de pôles nₚₐᵢᵣₑₛ du rotor et au nombre de phases nₚₕₐₛₑₛ par la relation n_{dents} = nₚₐᵢᵣₑₛ * nₚₕₐₛₑₛ.

Chaque secteur 120 comporte sur ses côtés 123a et 123b destinés à coopérer avec les secteurs 120 adjacents des reliefs respectifs 124a et 124b. Ces reliefs 124a et 124b présentent des formes complémentaires, avec un profil généralement triangulaire en vue de dessus, l'un en creux l'autre en saillie, avec deux côtés sensiblement rectilignes reliés par un arrondi. La coopération des reliefs 124a et 124b contribue au bon positionnement des secteurs 120 entre eux lors de l'assemblage du circuit magnétique du stator. Chaque secteur 120 comporte également, sur ses côtés 123a et 123b, des gorges 125a et 125b respectives, chacune de section transversale demi-circulaire, situées dans le voisinage des reliefs 124a et 124b, et formant des trous 125 de section circulaire lorsque les secteurs 120 sont assemblés. Ces trous 125 servent au montage de trois détecteurs 190, comme cela sera précisé dans la suite.

On remarquera sur la figure 5 que l'entrefer E, à l'interface entre deux secteurs 120 adjacents, passe par le milieu de la dent 130 correspondante, ce qui permet de réduire les pertes magnétiques puisque le flux magnétique peut circuler sans rencontrer d'entrefer d'une demi-dent à la demi-dent adjacente d'un même secteur 120, lors du fonctionnement de la machine. De plus, les secteurs peuvent être réalisés avec des éléments découpés pratiquement sans chute avec des outils de taille relativement petite, donc capables de grandes cadences.

L'ensemble des secteurs 120 est inséré à force dans le carter cylindrique 110 et la cohésion du circuit magnétique formé par l'ensemble des secteurs 120 est assurée par les forces de compression radiales exercées par le carter 110 sur les secteurs 120, les portées d'appui des secteurs entre eux étant relativement grandes.

Chaque secteur 120 définit une encoche 140 dont les côtés opposés 141a et 141b font chacun un angle i de plus de 90° avec les régions adjacentes 142a et 142b du fond de l'encoche 140, elles-mêmes perpendiculaires aux rayons passant par la ligne de raccordement de la dent concernée avec le fond de l'encoche. Dans l'exemple de réalisation décrit, l'angle i vaut 90,4°, cette valeur n'étant bien entendu qu'un exemple.

Les côtés 123a et 123b des secteurs sont généralement alignés chacun avec un rayon, hormis les reliefs 124a, 124b, 125a et 125b, et la largeur de chaque dent 130 croît légèrement, hormis des découpes 144a ou 144b réalisées à proximité de son extrémité libre 131 tournée vers le rotor, au fur et à mesure que l'on s'éloigne du rotor.

On remarquera à l'examen de la figure 5 que chaque dent 130 ne comporte pas, dans le voisinage de son extrémité libre 131, d'épanouissements polaires, contrairement à un grand nombre de stators connus qui présentent des encoches semi-fermées. Dans l'exemple représenté, les parties d'extrémité 132a et 132b de chaque dent 130, situées entre son extrémité libre 131 et les découpes 144a ou 144b, sont alignées avec les côtés 141a et 141b, respectivement. L'extrémité libre 131 est une portion de cylindre de révolution, de même axe que l'axe de rotation du rotor, et concave vers le rotor.

Le fond de chaque encoche comporte une région médiane 142c reliant les régions 142a et 142b et perpendiculaire à un rayon coupant l'encoche 140 à mi-largeur, représenté en trait discontinu sur la figure 5.

Comme mentionné précédemment, chaque dent 130 reçoit une bobine individuelle 340, occupant dans chaque encoche 140 adjacente à la dent 130 considérée, sensiblement la moitié du volume de cette encoche.

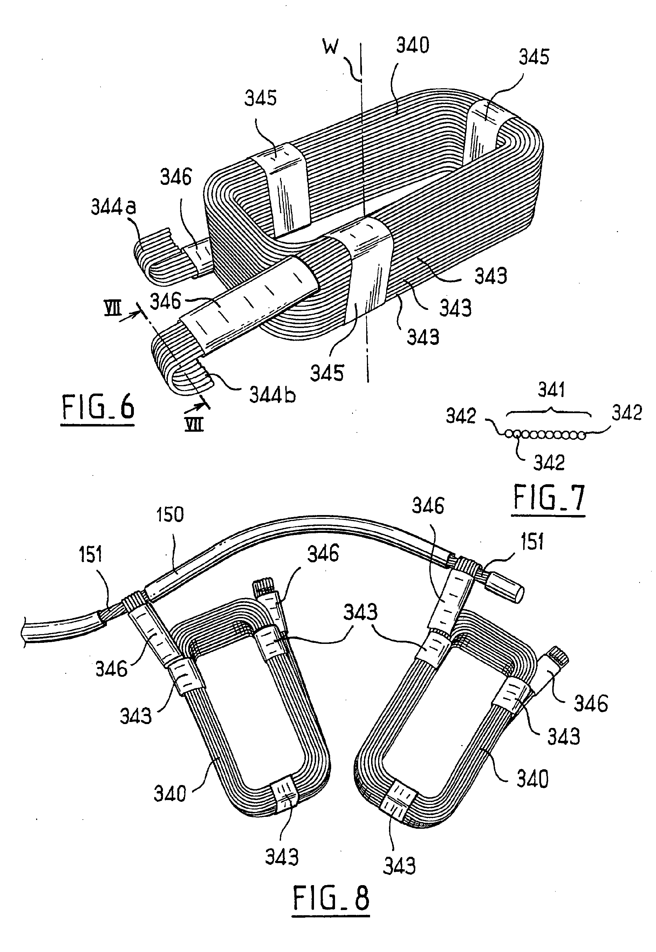

On a représenté isolément à la figure 6 une bobine individuelle 340. Celle-ci est formée par l'enroulement autour d'un axe géométrique d'enroulement W d'un faisceau 341 de fils électriques émaillés 342, ce faisceau étant sensiblement plat en section transversale, comme on peut le voir sur la figure 7.

Lorsque le faisceau 341 est observé en section transversale au niveau des spires, sa plus grande dimension est orientée sensiblement perpendiculairement à l'axe d'enroulement W.

Dans l'exemple considéré, le faisceau 341 comporte dix conducteurs individuels 342, chacun de section circulaire. Le faisceau 341 forme une vingtaine de spires 343 superposées. Les conducteurs 342 sont isolés électriquement les uns des autres au niveau des spires grâce à l'utilisation de fil émaillé. Les conducteurs 342 sont dénudés à leurs extrémités pour former des extrémités de connexion électrique 344a et 344b, recourbées chacune en forme de crochet vers un plan médian de la bobine, perpendiculaire à l'axe d'enroulement W. Ces crochets, à la fin du processus de fabrication de la bobine, sont ouverts vers le corps de celle-ci.

On voit sur la figure 6 que tous les conducteurs 342 de l'extrémité 344a sont recourbés vers le haut puis vers le corps de la bobine tandis que les fils de l'extrémité 344b sont recourbés vers le bas puis vers le corps de la bobine. Les extrémités 344a et 344b ne font sensiblement pas saillie hors du plan des deux faces d'extrémité de la bobine. Les spires qui constituent le corps de la bobine peuvent être maintenues à l'état superposé, avant imprégnation par une résine, par des bandes de toile adhésive 345. Des manchons de gaine isolante 346 sont engagés sur les parties du faisceau 341 s'étendant entre les extrémités 344a et 344b et le corps de la bobine.

La section intérieure de la bobine 340 présente une forme générale rectangulaire, comme on peut le voir sur la figure 8. Les bobines 340 sont bobinées sur des formes comportant deux grandes faces opposées planes faisant entre elles le même angle que les côtés 14 la et 141b d'une dent, de sorte que la largeur de la section intérieure de chaque bobine varie sensiblement d'une face d'extrémité à la face opposée. On peut s'en apercevoir en essayant de monter une bobine à l'envers sur une dent 130 du stator 100.

On peut voir sur la figure 8 que les bobines 340 sont reliées électriquement par une extrémité de connexion électrique 344a ou 344b à des conducteurs électriques gainés 150, partiellement dénudés, avant d'être montées sur les dents 130 du stator 100. Les crochets formés par les extrémités 344a et 344b sont agencés de manière à épouser sensiblement le diamètre extérieur des conducteurs électriques 150 dans les parties dénudées 151. Ces parties dénudées peuvent être formées non seulement aux extrémités des conducteurs électriques 150 mais encore entre ces dernières, par enlèvement sur une longueur limitée de la gaine isolante en matière plastique.

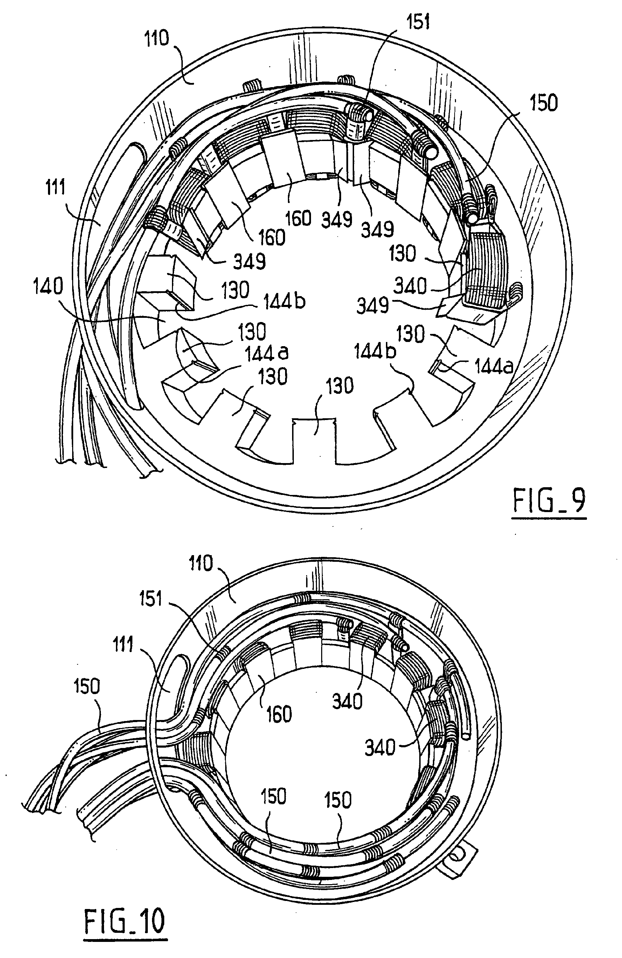

Dans l'exemple décrit, on forme des chapelets de deux bobines 340 qui sont ensuite montés sur les dents 130 correspondantes, comme illustré à la figure 9. Des feuilles 349 d'isolant sont interposées entre les dents et le fond des encoches et les bobines. On peut voir les extrémités de ces feuilles 349 sur les figures 3 et 9.

Au fur et à mesure du montage des bobines 340 sur les dents 130, des cales de maintien 160 sont glissées dans les découpes 144a, 144b pour fermer les encoches 140. Ces cales 160 comportent, comme on peut le voir sur la figure 2, des cloisons 161 s'étendant entre les parties des deux bobines 340 logées dans l'encoche 140 concernée.

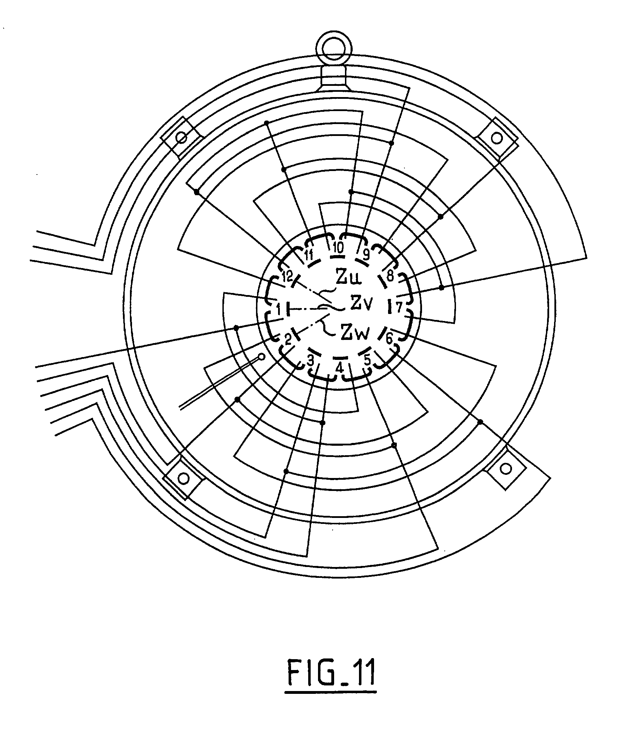

Une fois toutes les bobines 340 mises en place, les câbles 150 s'étendent suivant des trajets sensiblement circulaires d'un côté du circuit magnétique du stator, en retrait des extrémités libres 131 des dents, comme représenté à la figure 10, ces câbles étant attachés entre eux par des colliers, et l'on procède à l'imprégnation du stator avec une résine isolante, de manière conventionnelle. Le schéma précis de connexion électrique des douze bobines est donné à la figure 11, mais il ne s'agit que d'un exemple.

On comprend que l'utilisation de bobines individuelles 340, installées de la manière qui vient d'être décrite, sur des dents de largeur non constante, est particulièrement avantageuse car elle facilite grandement le remplacement des bobines 340. En effet, pour remplacer une bobine 340 il suffit, rotor 200 enlevé, de dessouder les extrémités 344a et 344b d'une bobine des portions dénudées 151 correspondantes, d'enlever les cales 160 concernées et d'extraire la bobine 340. Une bobine 340 de remplacement, imprégnée de résine, peut être ensuite mise en place en étant engagée sur la dent 130 précédemment libérée, puis ses extrémités 344a et 344b soudées sur les portions dénudées 151. La convergence des côtés 141a et 141b de la dent 130 vers le rotor et la forme correspondante de la section intérieure de la bobine contribue à son immobilisation sur la dent 130. La réparation peut se faire sur place, sans avoir à renvoyer la machine chez le fabricant, et sans avoir à procéder à une nouvelle imprégnation du stator, ce qui permet de raccourcir le temps de réparation. Le moteur 10 peut avantageusement être livré avec une ou plusieurs bobines 340 de remplacement.

Le rotor 200 est à concentration de flux et comporte plusieurs aimants 270, s'étendant radialement, disposés entre des pièces polaires 230. L'aimentation des aimants 270 est transverse. Les pièces polaires 230 ne sont pas reliées magnétiquement entre elles, étant fixées sur un arbre amagnétique, en aluminium.

Les aimants 270, qui présentent une résistivité électrique peu élevée, ne sont pas soumis à un échauffement risquant de les démagnétiser grâce à la protection conférée par les pièces polaires vis-à-vis des courants induits de surface.

Une zone annulaire A est ménagée autour d'une joue fixée sur le rotor, permettant la lecture du champ magnétique des aimants 270 du rotor au moyen de détecteurs 190 que l'on peut voir sur la figure 2.

Ces détecteurs 190 sont, dans l'exemple de réalisation décrit, au nombre de trois, le moteur étant triphasé, et comprennent chacun un capteur à effet Hall agencé pour détecter le champ magnétique au-dessus de la région périphérique A du rotor 200, autour de la joue d'extrémité précitée. La lecture du champ magnétique se fait selon un axe parallèle à l'axe de rotation du rotor, le capteur à effet Hall venant en recouvrement de la région périphérique A. Les détecteurs 190 sont montés sur trois dents consécutives 130 situées au voisinage de l'ouïe 111.

On voit sur la figure 2 que les détecteurs 190 peuvent recouvrir légèrement le rotor 200, grâce au positionnement en retrait de la joue d'extrémité.

Chaque détecteur 190 est fixé par une vis 191 sur une dent 130 du stator, cette vis 191 étant engagée dans un trou 125. Chaque détecteur 190 s'étend suivant l'axe radial Zᵤ, Zᵥ ou Z_{w} de la dent associée et traverse la bobine 340 engagée sur cette dent. Les bobines 340 présentent à cet effet une section intérieure dont la longueur est suffisamment grande pour permettre le passage du détecteur 190. L'espace ménagé entre une bobine et la dent correspondante pour le passage du détecteur peut être de l'ordre de 5mm, par exemple, un tel espace permettant d'isoler la bobine et la dent là où il n'y a pas d'isolant 349.

La lecture directe du champ magnétique des aimants permanents 270 est avantageuse parce qu'elle permet d'éviter d'avoir à rapporter sur le rotor des éléments spécifiques servant uniquement à la lecture de la position angulaire du rotor. La fabrication du rotor s'en trouve simplifiée et la fiabilité renforcée. De plus, le montage des détecteurs 190 dans l'espace compris entre les bobines 340 et les dents 130 s'avère particulièrement compact, tout en permettant un accès aisé aux détecteurs 190 afin de les remplacer, si nécessaire.

Chaque détecteur 190 est positionné à l'intérieur d'une bobine 340 de phase donnée (u, v et w). Chaque détecteur 190 permet de détecter quelle polarité du rotor se situe en face de la bobine associée (et donc de la phase concernée) à un instant donné. Chaque détecteur 190 délivre un signal bas ou haut selon la polarité détectée. Chaque détecteur 190 comporte un circuit électronique de mise en forme des signaux délivrés par le capteur à effet Hall, afin de réduire la sensibilité aux parasites. Selon la position du rotor, il y a six possibilités de combinaison des différents signaux délivrés par les détecteurs 190, et chaque changement de triplet constitué par les états des détecteurs 190 correspondant à une position angulaire déterminée du rotor. On peut ainsi connaître à des instants précis la position angulaire du rotor, et calculer par interpolation la position du rotor en ces instants, connaissant sa vitesse. L'excitation des bobinages 340 peut ainsi s'effectuer de manière optimale, avec le déphasage souhaité. Le courant dans chaque bobine peut ainsi s'annuler en changeant de sens lorsqu'un aimant se trouve dans l'axe de la dent correspondante.

Le rotor 200 comporte, sur l'une au moins des joues d'extrémité, des ailettes 291 de refroidissement, visibles sur la figure 1 notamment. On notera qu'une action de refroidissement supplémentaire est obtenue grâce à la présence des lobes 235 formés par les pièces polaires 230 à la périphérie du rotor, qui permettent de générer un courant d'air de refroidissement au coeur même du moteur.

L'invention permet de fabriquer des machines tournantes électriques à partir d'une gamme de circuits magnétiques de stators et de rotors préfabriqués, de différents diamètres, les stators présentant des dents standards. On choisira les dimensions axiales des circuits magnétiques du rotor et du stator en fonction de la puissance à fournir, en empilant un nombre plus ou moins important de secteurs et de pièces polaires. Seules les bobines pourront être fabriquées sur mesure pour un circuit magnétique de stator réalisé à partir d'éléments préfabriqués, en déterminant le nombre de spires de la bobine, le diamètre des fils conducteurs du faisceau plat et le nombre de ces fils, en fonction des performances demandées par l'utilisateur de la machine.

L'invention n'est pas limitée à un moteur synchrone et s'applique également à la fabrication d'une génératrice. Le rotor peut être intérieur ou extérieur.

La puissance électrique de la machine peut être comprise par exemple entre 1 et 750 kW. La vitesse de rotation du rotor peut être comprise par exemple entre 1000 et 10000 trs/mn. Une machine conforme à l'invention peut trouver également des applications lorsque la vitesse est inférieure à 1000 trs/mn. Le diamètre extérieur de la machine peut être compris par exemple entre 50 mm et 1 m ; dans les applications les plus courantes, le diamètre extérieur pourra être compris entre 100 et 600 mm.

L'invention n'est pas limitée à un nombre de pôles particuliers ni à l'alimentation du stator avec du courant triphasé. Le courant peut être polyphasé à nₚₕₐₛₑₛ phases, n différent de trois.

Les bobines pourraient être réalisées autrement.

## Revendications

1. Stator de machine tournante électrique, **caractérisé par le fait qu'**il comporte un circuit magnétique de stator, comprenant des dents (130) et des bobines individuelles (340) engagées chacune sur une dent, chaque bobine comportant des extrémités de connexion électrique (344a, 344b) formées par un faisceau plat de fils dénudés recourbés en forme de crochet, ces extrémités de connexion étant soudées sur des portions localement dénudées (151) de câbles électriques gainés (150).

2. Stator selon la revendication 1, **caractérisé par le fait que** les extrémités de connexion électrique en forme de crochets sont dirigées vers un plan médian de la bobine, perpendiculaire à l'axe d'enroulement (W).

3. Stator selon l'une des revendications 1 et 2, **caractérisé par le fait que** chaque dent présente deux faces opposées (141a, 141b) sensiblement planes et non parallèles, qui convergent avec un angle vers le rotor et **par le fait que** les bobines (340) présentent une section intérieure ayant deux faces opposées formant un angle sensiblement égal à celui des dents, de manière à pouvoir se coincer sur celles-ci.

4. Stator selon l'une quelconque des revendications précédentes, **caractérisé par le fait que** chaque bobine individuelle (340) comporte un faisceau (341) de fils isolés (342), ce faisceau étant sensiblement plat et enroulé autour d'un axe géométrique d'enroulement (W) de manière à former une pluralité de spires superposées, la section transversale du faisceau, au niveau des spires superposées, ayant une grande dimension orientée sensiblement perpendiculairement à l'axe d'enroulement de la bobine.

5. Stator selon la revendication précédente, **caractérisé par le fait que** les fils (342) sont de section circulaire.

6. Stator selon l'une quelconque des revendications précédentes, **caractérisé par le fait que** la section intérieure de chaque bobine est sensiblement rectangulaire.

7. Stator selon la revendication précédente, **caractérisé par le fait que** la section intérieure de la bobine est plus large d'un côté que de l'autre.

8. Stator selon l'une quelconque des revendications précédentes, **caractérisé par le fait que** les dents du stator comportent des découpes (144a, 144b) permettant de fixer sur le stator des cales (160) de maintien des bobines individuelles (340) montées sur les dents (130), chaque cale comportant une cloison séparatrice (161) s'étendant sensiblement au milieu de l'encoche correspondante.

9. Stator selon l'une quelconque des revendications précédentes, **caractérisé par le fait que** chaque bobine (340) présente une section intérieure sensiblement rectangulaire dont la dimension du grand côté est supérieure à la dimension axiale de la dent (130) sur laquelle elle est engagée, afin de ménager un espace suffisant pour permettre le passage d'un détecteur (190) permettant de délivrer un signal représentatif de la rotation du rotor.

10. Moteur synchrone comportant un rotor à aimants permanents et à concentration de flux, et un stator tel que défini dans l'une quelconque des revendications précédentes.

11. Procédé de fabrication d'un stator, **caractérisé par le fait qu'**il comporte les étapes suivantes
- fabriquer un circuit magnétique de stator ayant des dents (130),
- fabriquer des bobines individuelles (340) ayant chacune des extrémités de connexion électrique (344a, 344b) formées par un faisceau plat de fils (342) dénudés recourbés en forme de crochet,
- souder les extrémités de connexion électrique des bobines à des câbles gainés (150), partiellement dénudés aux points de connexion (151) avec les bobines.
